# EUROPÄISCHE PATENTSCHRIFT

(11) **EP 1 049 824 B1**
(45) Veröffentlichungstag und Bekanntmachung des Hinweises auf die Patenterteilung: **26.05.2004**
(21) Anmeldenummer: 99906193.0
(22) Anmeldetag: 22.01.1999
(51) Int. Cl.: D01F 1/04, D01F 2/14

(54) **LUMINESZIERENDE FASERN, VERFAHREN ZU DEREN HERSTELLUNG UND DEREN VERWENDUNG**
LUMINESCENT FIBRES, METHOD FOR PRODUCING SAME AND THEIR USE
FIBRES LUMINESCENTES, LEUR PROCEDE DE FABRICATION ET LEUR UTILISATION

(30) Priorität: 23.01.1998 DE 19802588
(43) Veröffentlichungstag der Anmeldung: 08.11.2000
(73) Patentinhaber: Riedel-de Haen GmbH, 30926 Seelze (DE)
(72) Erfinder: SIGGEL, Alfred, D-30927 Seelze (DE); POTRAWA, Thomas, D-30927 Seelze (DE); LANGHEIM, Hermann, D-30823 Garbsen (DE)
(74) Vertreter: Bublak, Wolfgang, Dr.
(86) Internationale Anmeldenummer: PCT/EP1999/000430
(87) Internationale Veröffentlichungsnummer: WO 1999/037836

(56) Entgegenhaltungen:
- EP-A- 0 393 645
- EP-A- 0 684 326
- WO-A-98/39392
- DE-A- 3 434 971
- US-A- 4 781 647
- DATABASE CHEMABS CHEMICAL ABSTRACTS SERVICE, COLUMBUS, OHIO, US KUDO, YOSHINORI ET AL: "Manufacture of fluorescent fibers" XP002103887 & JP 01 168911 A (KURARAY CO LTD) 4. Juli 1989
- PATENT ABSTRACTS OF JAPAN vol. 098, no. 001, 30. Januar 1998 & JP 09 228149 A (MITSUBISHI RAYON CO LTD), 2. September 1997
- DATABASE WPI Section Ch, Week 9603 Derwent Publications Ltd., London, GB; Class A23, AN 96-027157 XP002103888 & JP 07 300722 A (MATSUI CHEM IND CO LTD) , 14. November 1995
- DATABASE WPI Section Ch, Week 9023 Derwent Publications Ltd., London, GB; Class A32, AN 90-174050 XP002103889 & JP 02 112414 A (TEIJIN LTD) , 25. April 1990

## Beschreibung

Die Erfindung betrifft lumineszierende Viskose fasern mit wenigstens einem darin verteilten anorganischen Leuchtstoff-Pigment.

Lumineszierende, mit löslichen organischen, ultraviolett-aktiven Farbstoffen eingefärbte Fasern auf der Basis von Polyamid oder Viskose sind bekannt. Solche Fasern werden beispielsweise in Wertdokumenten zum Nachweis von deren Echtheit verwendet. Diese Fasern emittieren bei Stimulierung mit UV-Strahlung je nach dem verwendeten Farbstoff oder der verwendeten Farbstoffmischung grünes, gelbes, rotes oder blaues Licht. Solche organische Farbstoffe enthaltende Fasern besitzen jedoch den Nachteil geringer Lichtechtheit, und mit organischen ultraviolett-aktiven Farbstoffen läßt sich weder Infrarotlumineszenz noch Phosphoreszenz erzielen. Aufgrund dieser Nachteile sind solche Fasern für die Sicherheitskennzeichnung von Wertdokumenten unbrauchbar.

Die DE-OS 19 539 315 beschreibt lumineszierende Regeneratzellulosefasern, die anorganische Leuchtstoffe mit einer mittleren Teilchengröße kleiner als 1 µm, insbesondere von 0,5 bis 0,7 µm in einer Menge von 0,01 bis 5 Gew.% enthalten. Diese anorganischen Leuchtstoffe sind Phosphate, Wolframate, Oxide, Silikate und Aluminate der Erdalkalimetalle, der Nebengruppenelemente oder der Seltenen Erden oder Halogenide der Alkali- oder Erdalkalimetalle, jeweils mit Dotierungen mit Mangan, Antimon, Zinn, Blei, Kupfer, Silber oder den Seltenen Erden. Diese anorganischen Leuchtstoffe zeichnen sich gegenüber den organischen Farbstoffen durch Lichtechtheit aus, doch ergeben auch sie weder Phosphoreszenz- noch Infrarotlumineszenzeffekte und führen nur zu geringen Lumineszenzintensitäten, was beispielsweise bei der Prüfung mit solchen Leuchtstoffen gekennzeichneter Wertdokumente zu unsicheren Ergebnissen führen kann,

Die der Erfindung zugrundeliegende Aufgabe bestand somit darin, lumineszierende Fasern, insbesondere zur Verarbeitung in Wertdokumenten, zu bekommen, die Fluoreszenz- oder Phosphoreszenzeffekte ergeben, hohe Lichtechtheit besitzen und intensive Lumineszenzeffekte im sichtbaren und/oder nichtsichtbaren Wellenlängenbereich aufweisen.

Erfindungsgemäß wird diese Aufgabe durch lumineszierende Viskose fasern mit wenigstens einem darin verteilten anorganischen Leuchtstoff-Pigment dadurch gelöst, daß das anorganische Leuchtstoff-Pigment eine mittlere Teilchengröße von 1 bis 30 µm besitzt.

Die Intensivierung der Lumineszenz durch die Wahl bestimmter mittlerer Teilchengrößen des Leuchtstoff-Pigmentes ist überraschend, da in der DE-OS 19 539 315 ausdrücklich gesagt ist, daß die anorganischen Leuchtstoffe vorteilhaft eine mittlere Teilchengröße von kleiner als 1 µm haben sollen und diese Offenlegungsschrift in der Beschreibungseinleitung auf die japanische Patentveröffentlichung Nr. 87-327 866 hinweist, in welcher beschrieben ist, daß Yttriumoxysulfid als Leuchtstoff-Pigment beim Vermahlen auf Teilchengrößen kleiner als 1 µm den Lumineszenzeffekt verliert.

In den erfindungsgemäßen lumineszierenden Fasern ist das faserbildende Material Viskose, da so hergestellte lumineszierende Fasern mit den üblichen Papierrohstoffen auf Basis von Zellulose gut verträglich und mit verschiedenen Druckverfahren, wie Offset, bedruckbar sind, so daß solche Fasern ohne Probleme zur Kennzeichnung von Papieren, speziell Wertdokumenten, verwendet werden können. Auch im Textilbereich lassen sich die erfindungsgemäßen Verfahren zur verdeckten oder offenen Ausrüstung hochwertiger Markenprodukte verwenden. Die erzielbare intensive Lumineszenz, verbunden mit hoher Lichtechtheit, macht die erfindungsgemäßen lumineszierenden Fasern besonders geeignet für die Sicherheitskennzeichnung beliebiger faserhaltiger Gegenstände, besonders von Textilien, Papieren und besonders von Wertdokumenten.

Bevorzugt haben die erfindungsgemäß verwendeten anorganischen Leuchtstoff-Pigmente eine mittlere Teilchengröße von 2 bis 30 µm, weiter bevorzugt 4 bis 20 µm, und insbesondere von 5 bis 20 µm. Der Gehalt an den erfindungsgemäß verwendeten Leuchtstoff-Pigmenten in lumineszierenden Fasern kann in einem weiten Bereich variieren und liegt zweckmäßig bei einer Menge von 0,01 bis 50 Gew.-%, vorzugsweise mehr als 5 Gew.% bis zu 50 Gew.%, bezogen auf die wasserfreie Gesamtfasermasse. Weiter bevorzugt sind Prozentgehalte von 7 bis 40, inbesondere von 10 bis 20 Gew.%, bezogen auf die wasserfreie Gesamtfasermasse.

Eine besonders bevorzugte Gruppe von erfindungsgemäß zu verwendenden anorganischen Leuchtstoff-Pigmenten ist die, welche bei Anregung mit sichtbarer oder ultravioletter Strahlung einen Phosphoreszenzeffekt ergibt. Darunter werden solche Leuchtstoff-Pigmente verstanden, bei denen an dem Lumineszenzprozeß auch energiespeichemde Vorgänge beteiligt sind, so daß die Lumineszenz wenigstens teilweise auch noch nach dem Ende der Anregung vorhanden ist. Der Phosphoreszenzeffekt hat den Vorteil, daß auf einfache Weise eine maschinelle Lesbarkeit vorliegt, wobei der Phosphoreszenzeffekt auch die räumliche Trennung des Ortes der Anregung vom Ort der Detektion erlaubt. Die Anregung des Phosphoreszenzeffektes ist bereits mit weißem Licht möglich, so daß zur Detektion eine visuelle Betrachtung in abgedunkelter Umgebung ausreicht. Dies erleichtert die Überprüfung einer Sicherheitskodierung von Produkten, wie Textilien, und die Überprüfung von Wertdokumenten.

Erfindungsgemäß verwendet man zweckmäßig anorganische Leuchtstoff-Pigmente, die bei Anregung mit sichtbarer oder ultravioletter Strahlung im Wellenlängenbereich von 200 bis 680 nm nach Ende der Anregung sichtbares Licht mit spektralen Anteilen im Wellenlängenbereich von 380 bis 680 nm emittieren.

Besonders geeignet sind dabei mit einem oder mehreren Übergangsmetallelementen oder Lanthanoidelementen dotierte Zinksulfide, Zinkcadmiumsulfide, Erdalkalialuminate, Erdalkalisulfide oder Erdalkalisilikate. Beispielsweise ergeben kupferdotierte Zinksulfide grüne Phosphoreszenz, Erdalkalialuminate, Erdalkalisulfide oder Erdalkalisilikate mit Lanthanoidelementen als Dotierungen grüne, blaue oder rote Phosphoreszenz und kupferdotierte Zinkcadmiumsulfide je nach dem Cadmiumgehalt gelbe, orangefarbene oder rote Phosphoreszenz.

Weiter bevorzugt werden Erdalkalialuminate, die mit Europium aktiviert sind, und solche, die neben Europium ein weiteres Seltenerdelement als Co-Aktivator, insbesondere Dysprosium aufweisen, verwendet. Besonders geeignete Erdalkalialuminate der oben genannten Art sind in der EP-A 0 622 440 und der US 5 376 303 beschrieben.

Eine andere Gruppe erfindungsgemäß einsetzbarer anorganischer Leuchtstoff-Pigmente ist diejenige, die bei Anregung mit ultravioletter Strahlung einen Fluoreszenzeffekt ergibt. Diese Pigmente emittieren bei Stimulierung mit ultravioletter Strahlung grünes, gelbes oder blaues Licht. Die Anwesenheit UVaktiver lumineszenzfähiger Materialien ist bereits mit einfachen handelsüblichen UV-Lichtquellen erkennbar, was einerseits einen Vorteil in der Anwendung darstellen kann, in anderen Fällen, wie bei Wertdokumenten dagegen, einen Nachteil darstellt, da die Ausstattung mit einem Sicherheitsmerkmal von Unbefugten sofort erkennbar ist.

In dieser Gruppe von Leuchtstoff-Pigmenten sind solche zweckmäßig, die bei Anregung mit ultravioletter Strahlung im Wellenlängenbereich von 200 bis 380 nm sichtbares Licht mit spektralen Anteilen im Wellenlängenbereich von 380 bis 680 nm emittieren. Besondere günstig sind dabei mit einem oder mehreren Übergangsmetallelementen oder Lanthanoidelementen dotierte Zinksulfide, Oxide, Oxysulfide, Silikate oder Aluminate. Beispielsweise ergeben kupferdotierte Zinksulfide grüne Fluoreszenz, silberdotierte Zinksulfide blaue Fluoreszenz und Oxide, Oxysulfide, Silikate oder Aluminate, die mit Übergangsmetallen oder Lanthanoiden dotiert sind, grüne, blaue oder rote Fluoreszenz.

Eine weitere bevorzugte Gruppe von erfindungsgemäß einzusetzenden Leuchtstoff-Pigmenten ist die der infrarotaktiven, unter denen solche Pigmente verstanden werden, die infrarotaktive Leuchtstoffe mit einem Lumineszenzprozeß enthalten, an dem zumindest teilweise langwellige, infrarote Strahlung mit Wellenlängen oberhalb von 680 nm beteiligt ist. Diese umfassen sowohl die sogenannten Anti-Stokes-Leuchtstoffe, die bei Anregung mit Infrarotstrahlung oberhalb 680 nm Lumineszenzstrahlung mit einer kürzeren Wellenlänge unter 680 nm emittieren, als auch die sogenannten Stokes-Leuchtstoffe, die bei Anregung mit Strahlung einer kürzeren Wellenlänge unter 680 nm Infrarotstrahlung mit einer Wellenlänge oberhalb 680 nm emittieren. Derartige Anti-Stokes-Leuchtstoffe sind u.a. in der WO 98/39392 und dem darin zitierten Stand der Technik beschrieben. Außerdem umfaßt diese Gruppe von Leuchtstoff-Pigmenten infrarotinfrarotwandelnde Leuchtstoffe, die bei Anregung mit Infrarotstrahlung infrarote Strahlung einer anderen Wellenlänge emittieren.

Das Verfahren zur Herstellung der erfindungsgemäßen lumineszierenden Fasern ist einfach und erfordert lediglich, daß man das mit dem Aktivator dotierte anorganische Leuchtstoff-Pigment dem faserbildenden Material oder einer Lösung desselben zusetzt und daraus Fasern spinnt. Beispielsweise wird das dotierte Pigment Viskosemasse zugesetzt, aus der nach dem Viskosespinnverfahren Fasern gesponnen werden. Man kann auch die dotierten Pigmente einer Zelluloselösung zusetzen und aus dieser Fasern spinnen, wie beispielsweise nach dem Cuproverfahren, dem Lyocellverfahren oder nach einem Verfahren über niedrigsubstituierte Celluloseether. Als Lösungsmittel kann dabei beispielsweise N-Methylmorpholinoxid/Wasser benutzt werden.

Durch Kombination mit einer geeigneten Anregungsquelle können derartige Viskosefasern für die Sicherheitsmarkierung von Produkten, den Nachweis der Originalität und zur Steuerung von automatischen Erkennungsprozessen von Textilien, Wertdokumenten und Sicherheitspapieren im weitesten Sinne dienen. In diesem Zusammenhang ist es notwendig, Materialien und Sicherheitsmerkmale zu verwenden, die sehr schwer zu fälschen und in Kombination mit anderen Sicherheitsmerkmalen produzierbar sind. Neben der einfachen Kontrolle durch jeden Einzelnen ist es auch erwünscht, daß die entsprechenden Sicherheitsmerkmale je nach Sicherheitsstufe im Zweifelsfalle auch nur analytisch mit erhöhtem Aufwand eindeutig nachzuweisen sind. Lumineszierende Fasern erlauben dabei eine lokalisierte, hohe Signalintensität und damit ein besseres Signal-Rausch-Verhältnis im Vergleich zu flächenhaften Aufbringungen entsprechender Leuchtstoff-Pigmente mittels üblicher Sicherheitsdrucktechnologien. Das langfristige Bestreben bei der Herstellung von Sicherheitsmerkmalen ist der technische/wissenschaftliche Vorsprung vor dem Fälscher und die Reduktion der Motivation zur Fälschung durch eine dem Sicherheitsmerkmal anhaftende Komplexität.

Für diese Anwendung bieten die erfindungsgemäßen Fasern große Vorteile bei der einfachen, raschen, kontaktlosen und preisgünstigen Kontrolle, der maschinellen Lesbarkeit, der Kombinierbarkeit mit anderen Effekten, der gezielten Anregung mit unterschiedlichen Wellenlängen und der verschiedenen Lumineszenzfarben bei Anregung mit unterschiedlichen Wellenlängen. Die erfindungsgemäßen Materialien sind zur Herstellung von nichtkopierbaren Textilien, Wertdokumenten und Sicherheitspapieren geeignet, mit den Rohstoffen auf der Basis von Zellulose gut verträglich und mit verschiedenen Druckverfahren, speziell Stahlstich- und Offsetdruck bedruckbar, so daß die Möglichkeit der Kombination mit Sicherheitsdruckfarben oder mit anderen Sicherheitsmerkmalen gegeben ist.

Durch Kombination mit einer geeigneten Anregungsquelle können die erfindungsgemäßen lumineszierenden Viskosefasern mit einem Phosphoreszenzeffekt beispielsweise für die offene Sicherheitsmarkierung von Produkten und den Nachweis ihrer Originalität dienen. Für diese Anwendung bieten die erfindungsgemäßen Fasern mit Phosphoreszenzeffekt große Vorteile bei der einfachen, raschen, kontaktlosen und preisgünstigen Kontrolle durch jeden Einzelnen, da die notwendige Anregung des Phosphoreszenzeffektes bereits mit weißem Tages- oder Kunstlicht möglich ist und zur Verifizierung des Sicherheitsmerkmales eine visuelle Betrachtung in abgedunkelter Umgebung ausreicht. Unter Verwendung eines Photodetektors ist zudem auf einfache Weise eine maschinelle Lesbarkeit gegeben, wobei der Phosphoreszenzeffekt auch die räumliche Trennung des Ortes der Anregung vom Ort der Verifizierung erlaubt.

Die erfindungsgemäßen Fasern mit Fluoreszenz, jedoch ohne Phosphoreszenzeffekt, gestatten ebenfalls eine Kontrolle durch jeden Einzelnen, die zum Nachweis notwendige UV-Anregung erhöht jedoch bereits den Schwierigkeitsgrad für Erkennung und stellen daher eine höhere Sicherheitsstufe dar.

Die Anwendung von infrarotaktiven Leuchtstoffen für die Kennzeichnung und Fälschungssicherung von Wertdokumenten stellt eine noch höhere Sicherheitsstufe dar, da die geringe Signalintensität von infrarotaktiven Leuchtstoff-Pigmenten den analytischen Aufwand für Anregung und Verifizierung sehr deutlich erhöht und bereits nur die Erkennung einer dementsprechenden Sicherheitsausrüstung erschwert.

### Beispiel 1

In eine Spinnlösung mit einem Gehalt von 9 Gewichtsteilen Zellulose wird bei Raumtemperatur eine Dispersion eines Leuchtstoff-Pigmentes eingemischt. Dazu werden 100 Gewichtsteile eines mit 400 ppm Kupfer dotierten Zinksulfids einer mittleren Teilchengröße von 5 µm in eine Lösung aus Polyvinylalkohol, Wasser und Orotan als Netzmittel eingerührt, so daß sich eine Dispersion aus 22 Gewichtsteilen des einzelteiligen Leuchtstoff-Pigmentes, 2,8 Gewichtsteilen Polyvinylalkohol und 0,05 Gewichtsteilen Orotan ergibt. Die Dispersion wird über ein handelsübliches Sieb mit einer Maschenweite von 40 µm filtriert, mit 10 000 Gewichtsteilen Spinnlösung vermischt und unter betriebsüblichen Bedingungen in einem sauren Fällbad versponnen. Nach dem Trocknen wird eine Faser erhalten, die bei Anregung mit ultravioletter Strahlung eine grüne Lumineszenzfarbe aufweist.

### Beispiel 2

Entsprechend Beispiel 1 werden 100 Gewichtsteile eines mit 400 ppm Kupfer dotierten Zinksulfides einer mittleren Teilchengröße von 5 µm direkt mit 10 000 Gewichtsteilen Spinnlösung vermischt, über ein handelsübliches Sieb mit einer Maschenweite von 40 µm filtriert und unter betriebsüblichen Bedingungen in einem sauren Fällbad versponnen. Nach dem Trocknen wird eine Faser erhalten, die bei Anregung mit ultravioletter Strahlung eine grüne Lumineszenzfarbe aufweist.

### Beispiel 3

Entsprechend Beispiel 1 werden 225 Gewichtsteile eines mit 400 ppm Kupfer dotierten Zinksulfides einer mittleren Teilchengröße von 5 µm als Dispersion mit 10 000 Gewichtsteilen Spinnlösung vermischt und unter betriebsüblichen Bedingungen in einem sauren Fällbad versponnen. Nach dem Trocknen wird eine Faser erhalten, die bei Anregung mit ultravioletter Strahlung eines grüne Lumineszenzfarbe mit gegenüber Beispiel 1 höheren Intensität aufweist.

### Beispiel 4

Entsprechend Beispiel 1 werden 100 Gewichtsteile eines mit 80 ppm Kupfer und 5 ppm Kobalt dotierten Zinksulfides einer mittleren Teilchengröße von 20 µm als Dispersion mit 10 000 Gewichtsteilen Spinnlösung vermischt und unter betriebsüblichen Bedingungen in einem sauren Fällbad versponnen. Nach dem Trocknen wird eine Faser erhalten, die bei Anregung mit ultravioletter Strahlung eines grüne Lumineszenzfarbe und nach Anregung mit weißem Licht eine grüne Phosphoreszenz aufweist.

### Beispiel 5

Entsprechend Beispiel 1 werden 100 Gewichtsteile eines 12 % Ytterbium und 8 % Erbium dotierten Yttriumoxidsulfides einer mittleren Teilchengröße von 10 µm als Dispersion mit 10.000 Gewichtsteilen Spinnlösung vermischt und unter betriebsüblichen Bedingungen in einem sauren Fällbad versponnen. Nach dem Trocknen wird eine Faser erhalten, die bei Anregung mit infraroter Strahlung eines grüne Lumineszenzfarbe aufweist.

## Patentansprüche

1. Verwendung lumineszierender Viskosefasern mit wenigstens einem darin verteilten anorganischen Leuchtstoffpigment mit einer mittleren Teilchengröße von 1 bis 30 µm in Wertdokumenten und Sicherheitspapieren.

2. Verwendung nach Anspruch 1, **dadurch gekennzeichnet, dass** das anorganische Leuchtstoffpigment bei Anregung mit sichtbarer oder ultravioletter Strahlung einen Phosphoreszenzeffekt ergibt.

3. Verwendung nach Anspruch 2, **dadurch gekennzeichnet, dass** das anorganische Leuchtstoffpigment aus Zinksulfiden, Zinkcadmiumsulfiden, Erdalkalialuminaten, Erdalkalisulfiden oder Erdalkalisilikaten, jeweils mit Dotierungen mit einem oder mehreren Übergangsmetallelementen oder Lanthanoidelementen besteht.

4. Verwendung nach Anspruch 1, **dadurch gekennzeichnet, dass** das anorganische Leuchtstoffpigment bei Anregung mit ultravioletter Strahlung einen Fluoreszenzeffekt ergibt.

5. Verwendung nach Anspruch 4, **dadurch gekennzeichnet, dass** das Leuchtstoffpigment aus Zinksulfiden, Oxiden, Lanthanoxisulfid, Silikaten oder Aluminaten, jeweils mit Dotierungen mit einem oder mehreren Übergangsmetallelementen oder Lanthanoidelementen besteht.

6. Verwendung nach Anspruch 1, **dadurch gekennzeichnet, dass** das anorganische Leuchtstoffpigment wenigstens teilweise durch Infrarotstrahlung anregbar ist.

7. Verwendung nach Anspruch 6, **dadurch gekennzeichnet, dass** das anorganische Leuchtstoffpigment ein Anti-Stokes-Leuchtstoff ist, der bei. Anregung mit Infrarotstrahlung oberhalb 680 nm Lumineszenzstrahlung einer kürzeren Wellenlänge unter 680 nm emittiert.

8. Verwendung nach Anspruch 6, **dadurch gekennzeichnet, dass** das anorganische Leuchtstoffpigment ein Stokes-Leuchtstoff ist, der bei Anregung mit Infrarotstrahlung einer Wellenlänge unter 680 nm infrarote Lumineszenzstrahlung oberhalb 680 nm emittiert.

9. Lumineszierende Viskosefasern mit wenigstens einem darin verteilten anorganischen Leuchtstoffpigment, **dadurch gekennzeichnet, dass** das anorganische Leuchtstoffpigment eine mittlere Teilchengröße von 4 bis 20 µm besitzt und bei Anregung mit ultravioletter Strahlung einen Fluoreszenzeffekt ergibt.

10. Lumineszierende Viskosefasern nach Anspruch 9, **dadurch gekennzeichnet, dass** das Leuchtstoffpigment aus Zinksulfiden, Oxiden, Lanthanoxisulfid, Silikaten oder Aluminaten, jeweils mit Dotierungen mit einem oder mehreren Übergangsmetallelementen oder Lanthanoidelementen besteht.

11. Lumineszierende Viskosefasern mit wenigstens einem darin verteilten anorganischen Leuchtstoffpigment, **dadurch gekennzeichnet, dass** das anorganische Leuchtstoffpigment eine mittlere Teilchengröße von 1 bis 30 µm besitzt, bei Anregung mit sichtbarer oder ultravioletter Strahlung einen Phosphoreszenzeffekt ergibt, und aus Zinksulfiden, Zinkcadmiumsulfiden, Erdalkalialuminaten, Erdalkalisulfiden oder Erdalkalisilikaten, jeweils mit Dotierungen mit einem oder mehreren Übergangsmetallelementen oder Lanthanoidelementen besteht.

12. Lumineszierende Viskosefasern mit wenigstens einem darin verteilten anorganischen Leuchtstoffpigment, **dadurch gekennzeichnet, dass** das anorganische Leuchtstoffpigment eine mittlere Teilchengröße von 1 bis 30 µm besitzt und wenigstens teilweise durch Infrarotstrahlung anregbar ist.

13. Lumineszierende Viskosefasern nach Anspruch 12, **dadurch gekennzeichnet, dass** das anorganische Leuchtstoffpigment ein Anti-Stokes-Leuchtstoff ist, der bei Anregung mit Infrarotstrahlung oberhalb 680 nm Lumineszenzstrahlung einer kürzeren Wellenlänge unter 680 nm emittiert.

14. Lumineszierende Viskosefasern nach Anspruch 12, **dadurch gekennzeichnet, dass** das anorganische Leuchtstoffpigment ein Stokes-Leuchtstoff ist, der bei Anregung mit Infrarotstrahlung einer Wellenlänge unter 680 nm infrarote Lumineszenzstrahlung oberhalb 680 nm emittiert.

## Claims

1. Use of luminescent viscose fibers having at least one inorganic luminophor pigment dispersed therein with an average particle size of from 1 to 30 nm in documents of value or security papers.

2. The use as claimed in claim 1, **characterized in that** the inorganic luminophor pigment produces a phosphorescent effect on excitation by visible or ultraviolet radiation.

3. The use as claimed in claim 2, **characterized in that** the inorganic luminophor pigment consists of zinc sulfides, zinc cadmium sulfides, alkaline earth metal aluminates, alkaline earth metal sulfides or alkaline earth metal silicates, all doped with one or more transition metal elements or lanthanoid elements.

4. The use as claimed in claim 1, **characterized in that** the inorganic luminophor pigment produces a fluorescent effect on excitation by ultraviolet radiation.

5. The use as claimed in claim 4, **characterized in that** the luminophor pigment consists of zinc sulfides, oxides, oxy sulfides, silicates or aluminates, all doped with one or more transition metal elements or lanthanoid elements.

6. The use as claimed in claim 1, **characterized in that** the inorganic luminophor pigment is at least partially excitable by infrared radiation.

7. The use as claimed in claim 6, **characterized in that** the inorganic luminophor pigment is an anti-Stokes luminophor which on excitation by infrared radiation above 680 nm emits luminescent radiation having a shorter wavelength below 680 nm.

8. The use as claimed in claim 6, **characterized in that** the inorganic luminophor pigment is a Stokes-luminophor which on excitation by radiation below 680 nm emits infrared luminescent radiation above 680 nm.

9. Luminescent viscose fibers having at least one inorganic luminophor pigment dispersed therein, **characterized in that** the inorganic luminophor has an average particle size of from 4 to 20 µm and emits fluorescent radiation on excitation by ultraviolet radiation.

10. Luminescent viscose fibers as claimed in claim 9, **characterized in that** the luminophor pigment consists of zinc sulfides, oxides, oxy sulfides, silicates or aluminates, all doped with one or more transition metal elements or lanthanoid elements.

11. Luminescent viscose fibers having at least one inorganic luminophor pigment dispersed therein, **characterized in that** the inorganic luminophor has an average particle size of from 1 to 30 µm and emits phosphorescent radiation on excitation by visible or ultraviolet radiation and consists of zinc sulfides, zinc cadmium sulfides, alkaline earth metal aluminates, alkaline earth metal sulfides or alkaline earth metal silicates, all doped with one or more transition metal elements or lanthanoid elements.

12. Luminescent viscose fiber having at least one inorganic luminophor pigment dispersed therein, **characterized in that** the inorganic luminophor pigment is at least in part excitable by infrared radiation.

13. Luminescent viscose fiber as claimed in claim 9, **characterized in that** the inorganic luminophor pigment is an anti-Stokes luminophor which on excitation with infrared radiation above 680 nm emits luminescent radiation at a shorter wave length below 680 nm.

14. Luminescent viscose fiber as claimed in claim 9, **characterized in that** the inorganic luminophor pigment is a Stokes-luminophor which on excitation by infrared radiation below 680 nm emits infrared luminescent radiation above 680 nm.

## Revendications

1. Utilisation de fibres de viscose luminescentes, comportant au moins un pigment luminescent inorganique, qui y est réparti et qui a une granulométrie moyenne de 1 à 30 µm, dans des documents de valeur et des papier de sûreté.

2. Utilisation selon la revendication 1, **caractérisée en ce que** le pigment luminescent inorganique donne, après excitation par un rayonnement visible ou ultraviolet, un effet de phosphorescence.

3. Utilisation selon la revendication 2, **caractérisée en ce que** le pigment luminescent inorganique est constitué de sulfures de zinc, de sulfures de zinc et de cadmium, d'aluminates de métaux alcalino-terreux, de sulfures de métaux alcalino-terreux ou de silicates de métaux alcalino-terreux, chacun étant dopé par un ou plusieurs éléments des métaux de transition ou éléments des lanthanides.

4. Utilisation selon la revendication 1, **caractérisée en ce que** le pigment luminescent inorganique donne, après excitation par un rayonnement ultraviolet, un effet de fluorescence.

5. Utilisation selon la revendication 4, **caractérisée en ce que** le pigment luminescent est constitué de sulfures de zinc, d'oxydes, d'oxysulfure de lanthane, de silicates ou d'aluminates, chacun dopé par un ou plusieurs éléments des métaux de transition ou éléments des lanthanides.

6. Utilisation selon la revendication 1, **caractérisée en ce que** le pigment luminescent inorganique peut être excité au moins partiellement par un rayonnement infrarouge.

7. Utilisation selon la revendication 6, **caractérisée en ce que** le pigment luminescent inorganique est une substance luminescente anti-Stokes, qui après excitation par un rayonnement infrarouge au-delà de 680 nm émet un rayonnement luminescent ayant une longueur d'onde plus courte, inférieure à 680 nm.

8. Utilisation selon la revendication 6, **caractérisée en ce que** le pigment luminescent inorganique est une substance luminescente Stokes, qui après excitation par un rayonnement infrarouge ayant une longueur d'onde inférieure à 680 nm émet un rayonnement luminescent infrarouge au-delà de 680 nm.

9. Fibres de viscose luminescentes, comportant au moins un pigment luminescent inorganique qui y est réparti, **caractérisées en ce que** le pigment luminescent inorganique a une granulométrie moyenne de 4 à 20 µm et, après excitation par un rayonnement ultraviolet, donne un effet de fluorescence.

10. Fibres de viscose luminescentes selon la revendication 9, **caractérisées en ce que** le pigment luminescent est constitué de sulfures de zinc, d'oxydes, d'oxysulfure de lanthane, de silicates ou d'aluminates, chacun dopé par un ou plusieurs éléments des métaux de transition ou éléments des lanthanides.

11. Fibres de viscose luminescentes comportant au moins un pigment luminescent inorganique qui y est réparti, **caractérisées en ce que** le pigment luminescent inorganique a une granulométrie moyenne de 1 à 30 µm, donne après excitation par un rayonnement visible ou ultraviolet un pigment phosphorescent, et est constitué de sulfures de zinc, de sulfures de zinc et de cadmium, d'aluminates de métaux alcalino-terreux, de sulfures de métaux alcalino-terreux ou de silicates de métaux alcalino-terreux, chacun dopé par un ou plusieurs éléments des métaux de transition ou éléments des lanthanides.

12. Fibres de viscose luminescentes comportant au moins un pigment inorganique qui y est réparti, **caractérisées en ce que** le pigment luminescent inorganique a une granulométrie moyenne de 1 à 30 µm et peut être excité au moins partiellement par un rayonnement infrarouge.

13. Fibres de viscose luminescentes selon la revendication 12, **caractérisées en ce que** le pigment luminescent inorganique est une substance luminescente anti-Stokes, qui après excitation par un rayonnement infrarouge au-delà de 680 nm émet un rayonnement luminescent ayant une longueur d'onde plus courte, inférieure à 680 nm.

14. Fibres de viscose luminescentes selon la revendication 12, **caractérisées en ce que** le pigment luminescent inorganique est une substance luminescente Stokes, qui après excitation par un rayonnement infrarouge ayant une longueur d'onde inférieure à 680 nm émet un rayonnement luminescent infrarouge au-delà de 680 nm.
